# EUROPEAN PATENT APPLICATION

(11) **EP 1 635 354 A2**
(43) Date of publication of application: **15.03.2006**
(21) Application number: 05107602.4
(22) Date of filing: 18.08.2005
(51) Int. Cl.: G11B 27/10

(54) **Photo reproducing apparatus and picture reproducing method**

(30) Priority: 03.09.2004 JP 2004257038
(71) Applicant: KABUSHIKI KAISHA TOSHIBA, Tokyo 105-8001 (JP)
(72) Inventor: Miyazawa, Akira c/o Toshiba Corporation, Tokyo 105-8001 (JP)
(74) Representative: Henkel, Feiler & Hänzel

(57) **Abstract**

A picture reproducing apparatus comprises a folder detecting unit (61) configured to, when connection with a recording medium (19) is detected, detect from the recording medium (19) a specific folder generated conforming to a predetermined picture file format standard, an acquisition unit (61) configured to, when the folder detecting unit (61) detects the specific folder, acquire predetermined digital video signals from the specific folder, and a display unit (14) configured to play back and display the digital video signals acquired by the acquisition unit (61).

## Description

The present invention relates to a picture reproducing apparatus and a picture reproducing method for displaying a multiplicity of photos, for example, shot by a digital camera and recorded in a memory card.

As is well known, the television broadcasting systems have been digitized in recent years. In Japan, for example, the digital terrestrial broadcast is now in their early stages, following the BS (broadcast satellite) digital broadcast and the 110-degree CS (communication satellite) digital broadcast.

A variety of digital broadcast receivers for receiving such digital television broadcast are provided which can be connected with a large-scale digital recording device such as a hard disk drive (HDD) to digitally record received programs and reproduce the recorded programs.

Currently, digital broadcast receivers include a function for visually displaying a multiplicity of photos shot by a digital camera and recorded in a memory card. In this case, such a memory card is adapted in which a multiplicity of photos are classified and recorded into folders. It is however not easy to let all the users understand the concept of folders.

It is hence essential for the digital broadcast receiver with a photo displaying function to display readily and simply a multiplicity of photos in a seamless mode read out from the memory card with no need of the user acknowledging the concept of folders.

Disclosed in Jpn. Pat. Appln. KOKAI Publication No. 2003-299008 is a technology for displaying on display means any image file stored in a directory assigned with a predetermined directory name, thus permitting the user to readily select a desired image file to be displayed.

Also, another technology is disclosed in Jpn. Pat. Appln. KOKAI Publication No. 2004-096582 in which management information for managing the action of recording files onto a recording medium is produced from at least information for specifying the location of each recorded file and a file number and held, and directories are produced on a recording medium based on the determination of the management information while the file name is set such that the files can consecutively be recorded by number in each directory, thus permitting the file management by a user to be simplified.

A further technology is disclosed in Jpn. Pat. Appln. KOKAI Publication No. 2004-071686 for joining a plurality of consecutive images in a seamless mode thus to construct a single panoramic image.

The present invention has been developed in view of the foregoing aspects and its object is to provide a picture reproducing apparatus and picture reproducing method in which a multiplicity of photos recorded on a recording medium can be displayed in a seamless mode readily and simply with no need of a user acknowledging the concepts of folders.

Another object of the present invention is to provide a picture reproducing apparatus and picture reproducing method which can automatically detect connection with a removable device in which digital video data can be recorded and then acquire digital video signals from the device.

According to one aspect of the present invention, there is provided a picture reproducing apparatus comprising: a recording medium detecting means configured to detect connection with a recording medium; a folder detecting means configured to, when the recording medium detecting means detects the connection with the recording medium, detect from the recording medium a specific folder generated conforming to a predetermined photo file format standard; an acquisition means configured to, when the folder detecting means detects the specific folder, acquire predetermined digital video signals from the specific folder; and a display means configured to play back and display the digital video signals acquired by the acquisition means.

According to another aspect of the present invention, there is provided a picture reproducing method comprising: a first step of detecting connection with a recording medium; a second step of, when the connection with the recording medium is detected, detecting from the recording medium a specific folder generated conforming to a predetermined photo file format standard; a third step of, when the specific folder is detected, acquiring predetermined digital video signals from the specific folder; and a fourth step of playing back and displaying the acquired digital video signals.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic diagram showing an embodiment of the invention, the diagram schematically explaining one example of a digital television broadcast receiver and a network system configured with the digital television broadcast receiver at the center;
FIG. 2 is a block diagram for explaining a primary signal processing system in the digital television broadcast receiver in the embodiment;
FIG. 3 is an external view for explaining a remote controller of the digital television broadcast receiver in the embodiment;
FIG. 4 is a flowchart illustrating an operation for displaying photos acquired from a memory card on the digital television broadcast receiver in the embodiment;
FIG. 5 is a diagram illustrating one example of a directory structure in the memory card in the embodiment;
FIG. 6 is a flowchart illustrating a first example of the operation for displaying photos acquired from a memory card on the digital television broadcast receiver in the embodiment;
FIG. 7 is a view for explaining one example of a screen in which photos acquired from the memory card are displayed on the digital television broadcast receiver in the embodiment;
FIG. 8 is a flowchart illustrating a second example of the operation for displaying photos acquired from a memory card on the digital television broadcast receiver in the embodiment;
FIG. 9 is a flowchart illustrating a third example of the operation for displaying photos acquired from a memory card on the digital television broadcast receiver in the embodiment;
FIG. 10 is a flowchart illustrating a fourth example of the operation for displaying photos acquired from a memory card on the digital television broadcast receiver in the embodiment;
FIG. 11 is a flowchart illustrating a fifth example of the operation for displaying photos acquired from a memory card on the digital television broadcast receiver in the embodiment; and
FIG. 12 is a flowchart illustrating an operation for displaying photos acquired from a USB device on the digital television broadcast receiver in the embodiment.

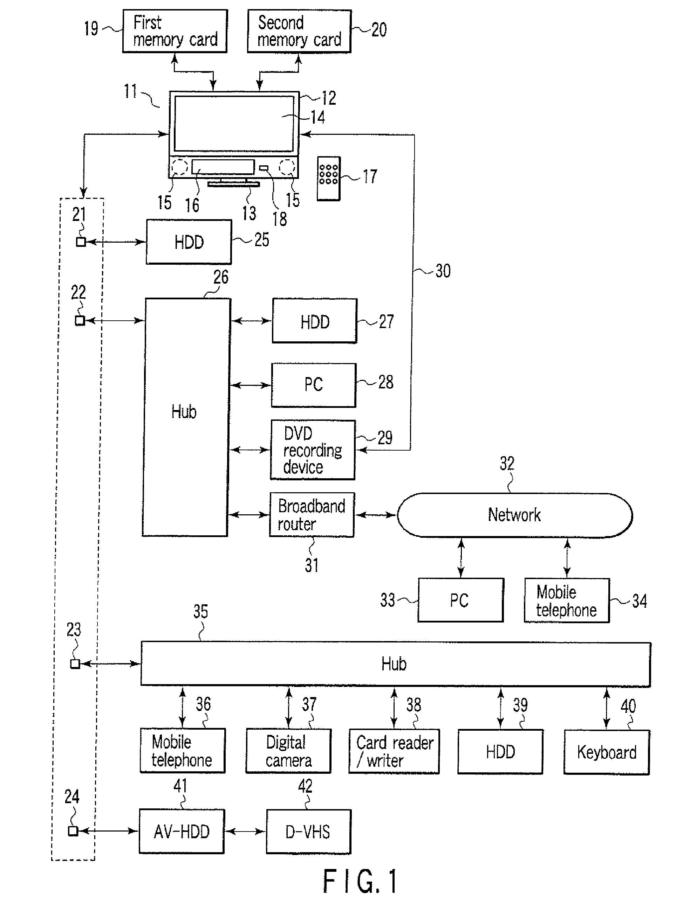

One embodiment of the present invention will be described in more detail referring to the relevant drawings. FIG. 1 schematically illustrates the external view of a digital television broadcast receiver 11 explained in this embodiment and a network system configured with the digital television broadcast receiver 11 as a center component.

The digital television broadcast receiver 11 is mainly composed of a thin type cabinet 12, and a support base 13 for supporting the cabinet 12 upright. The cabinet 12 includes a flat-panel display 14 such as a liquid crystal display, a loudspeaker 15, an operation unit 16, and a light receiving unit 18 for receiving operational information sent from a remote controller 17.

The digital television broadcast receiver 11 is configured to have a first memory card 19 detachably loaded thereon, such as a secure digital (SD) memory card, a multimedia card (MMC), or a memory stick. Information including TV programs and photos are recorded in and reproduced from the first memory card 19.

The digital television broadcast receiver 11 is also configured to have detachably loaded thereon a second memory card (IC card) 20 carrying, for example, contract information. Information are recorded in and reproduced from the second memory card 20.

The digital television broadcast receiver 11 includes a first local area network (LAN) terminal 21, a second LAN terminal 22, a universal serial bus (USB) terminal 23, and an i.Link terminal 24.

The first LAN terminal 21 is used as a LAN specific HDD dedicated port for recording and reproducing information in and from a LAN specific HDD 25 as a network attached storage (NAS) over the Ethernet (registered trademark).

As the first LAN terminal 21 serves as the LAN specific HDD dedicated port, it is possible to record information of the programs at high-definition TV quality in the HDD 25 regardless of the conditions of the network environment and the business of the network.

Also, the second LAN terminal 22 is used as a common LAN specific port over the Ethernet. For example, the second LAN terminal 22 may be connected via a hub 26 with a LAN specific HDD 27, a personal computer (PC) 28, and an HDD built-in digital versatile disk (DVD) recording device 29 for exchanging information with each other.

With respect to the DVD recording device 29, digital information communicated via the second LAN terminal 22 is only information of a control system, and therefore, an analog signal transmission path 30 is needed between the DVD recover 29 and the digital television broadcast receiver 11 for transmission of analog video and audio information.

The second LAN terminal 22 is connected via a broadband router 31 connected to the hub 26 with a network 32 such as the Internet, for exchanging information with a PC or a mobile telephone 34 via the network 32.

The USB terminal 23 is used as a common USB specific port. For example, the USB terminal 23 is connected via a hub 35 with a mobile telephone 36, a digital camera 37, a card reader/writer 38 for the memory card, an HDD 39, a keyboard 40, and other USB devices for exchanging information with each other.

The i.Link terminal 24 is used for serially connection with, for example, an AV-HDD 41, a D-VHS (digital video home system) 42 for exchanging information with each other.

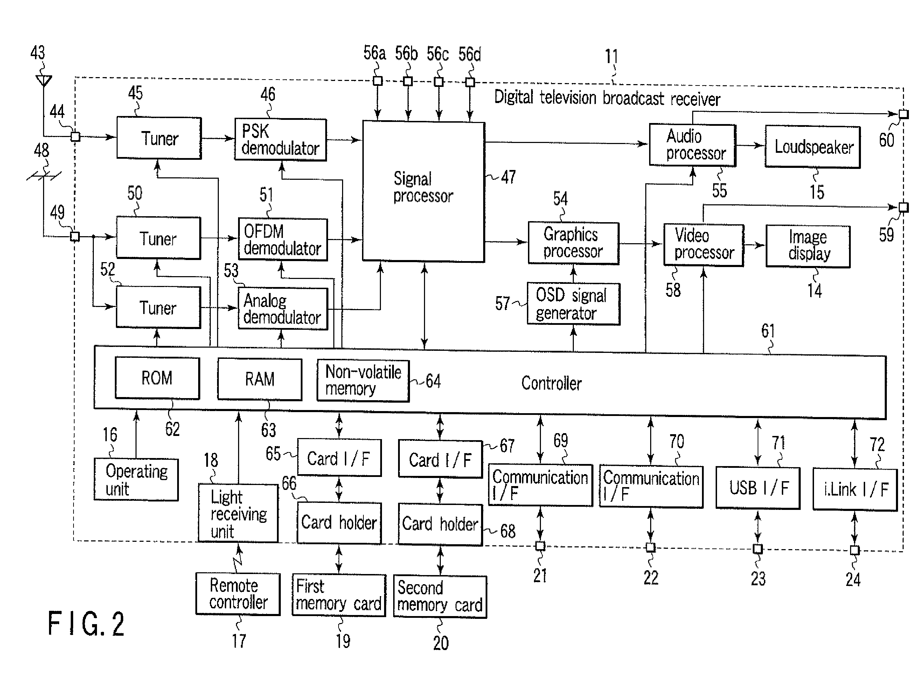

FIG. 2 illustrates a main signal processing system in the digital television broadcast receiver 11. Specifically, a digital satellite television broadcast signal received at a BS/CS digital broadcast signal antenna 43 is supplied via an input terminal 44 to a digital satellite broadcast tuner 45, whereby a broadcast signal of a desired channel is channel-selected.

The broadcast signal which has been channel-selected by the tuner 45 is then supplied to a phase shift keying (PSK) demodulator 46, demodulated to a digital video signal and a digital audio signal, and then outputted to a signal processor 47.

A digital terrestrial television broadcast signal received at an antenna 48 for terrestrial broadcast reception is supplied via an input terminal 49 to a digital terrestrial broadcast tuner 50, whereby a broadcast signal of a desired channel is channel-selected.

The broadcast signal which has been channel-selected by the tuner 50 is then supplied to an orthogonal frequency division multiplexing (OFDM) demodulator 51, demodulated to a digital video signal and a digital audio signal, and then outputted to the signal processor 47.

An analog terrestrial television broadcast signal received at the antenna 48 for terrestrial broadcast reception is supplied via the input terminal 49 to an analog terrestrial broadcast tuner 52, whereby a broadcast signal of a desired channel is channel-selected. The broadcast signal which has been channel-selected by the tuner 52 is supplied to an analog demodulator 53, demodulated to an analog video signal and an analog audio signal, and then outputted to the signal processor 47.

The signal processor 47 is provided for selectively applying digital signal processing to the digital video signal and audio signal supplied from the PSK demodulator 46 and the OFDM demodulator 51, respectively, and outputting the signals to a graphic processor 54 and an audio processor 55.

The signal processor 47 is connected with a plurality of input terminals (four in the embodiment) 56a, 56b, 56c, and 56d. The input terminals 56a, 56b, 56c, and 56d can receive analog video and audio signals from the outside of the digital television broadcast receiver 11.

The signal processor 47 selectively digitizes the analog video and audio signals respectively supplied from the analog demodulator 53 or the input terminals 56a to 56d, applies a predetermined digital signal processing to the digitized video and audio signals and then outputs the signals to the graphic processor 54 and the audio processor 55.

The graphic processor 54 has a function of superimposing an OSD signal generated from an OSD (on-screen display) signal generator 57 over the digital video signal supplied from the signal processor 47. The graphic processor 54 is also configured to selectively output the video output signal of the signal processor 47 and the OSD output signal of the OSD signal generator 57 and to output both the output signals so as to simultaneously display two separate images on the screen.

The digital video signal outputted from the graphic processor 54 is supplied to a video processor 58. The video processor 58 converts the inputted digital video signal into an analog video signal of the format which can be displayed by the image display 14. Then, The video processor 58 outputs the analog video signal to the image display 14 for displaying its image and derives it via an output terminal 59 to the outside.

The audio processor 55 converts the inputted digital audio signal into an analog audio signal of the format which can be reproduced by the loudspeakers 15. Then, the audio processor 55 outputs the analog audio to the loudspeakers 15 for emitting its sound and derives it via an output terminal 60 to the outside.

All the operations of the digital television broadcast receiver 11 including the above-described various receiving operations are entirely controlled by a controller 61. The controller 61 is equipped with a built-in central processing unit (CPU) for controlling each unit such that its operation contents are appropriately reflected in response to operational information received from the operation unit 16 or operational information sent from the remote controller 17 via the photo detector 18.

The controller 61 includes a read only memory (ROM) 62 in which control programs to be executed by the CPU are stored, a random access memory (RAM) 63 for providing the working area for the CPU, and a non-volatile memory 64 in which various setting information and control information etc. are stored.

The controller 61 is connected via a card interface (I/F) 65 to a card holder 66 to which the first memory card 19 can be detachably loaded. This allows the controller 61 to exchange information via the card I/F 65 with the first memory card 19 loaded to the card holder 66.

The controller 61 is also connected via a card I/F 67 to a card holder 68 to which the second memory card 20 can be detachably loaded. This allows the controller 61 to exchange information via the card I/F 67 with the second memory card 20 loaded to the card holder 68.

The controller 61 is further connected via a communication I/F 69 to the first LAN terminal 21. This allows the controller 61 to exchange information via the communication I/F 69 with the LAN specific HDD 25 connected to the first LAN terminal 21. In this case, the controller 61 has a dynamic host configuration protocol (DHCP) server function for controlling by assigning the LAN specific HDD 25 connected to the first LAN terminal 21 with an Internet protocol (IP) address.

The controller 61 is further connected via another communication I/F 70 to the second LAN terminal 22. This allows the controller 61 to exchange information via the communication I/F 70 with each device (See FIG. 1) connected to the second LAN terminal 22.

The controller 61 is further connected via a USB I/F 71 to the USB terminal 23. This allows the controller 61 to exchange information via the USB I/F 71 with each device (See FIG. 1) connected to the USB terminal 23.

The controller 61 is further connected via an i.Link terminal 72 to the i.Link terminal 24. This allows the controller 61 to exchange information via the i.Link I/F 72 with each device (See FIG. 1) connected to the i.Link terminal 24.

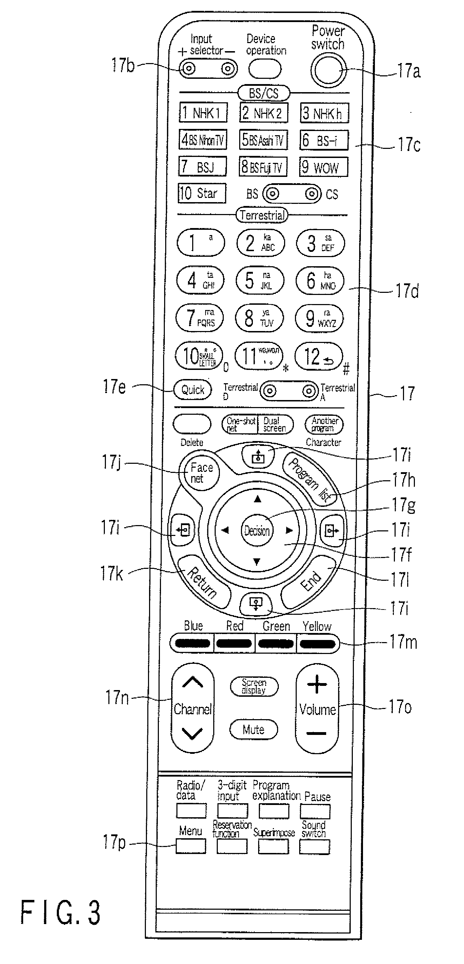

FIG. 3 illustrates an external view of the remote controller 17. The remote controller 17 mainly comprises a power key 17a, an input selector key 17b, an array of digital satellite broadcast channel direct access keys 17c, an array of terrestrial broadcast channel direct access keys 17d, a quick key 17e, a cursor key 17f, a decision key 17g, a program list key 17h, page scroll keys 171, a face net (navigation) key 17j, a return key 17k, an end key 171, color keys 17m of blue, red, green, and yellow, a channel up/down key 17n, a sound adjusting key 17o, and a menu key 17p.

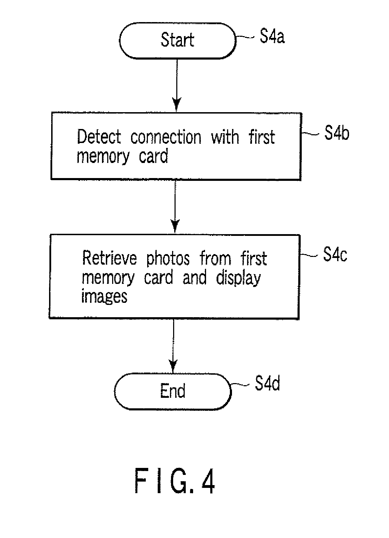

FIG. 4 is a flowchart showing an operation for selectively displaying many photos recorded in the first memory card 19 as digital video signals on the digital television broadcast receiver 11.

The operation starts with loading the first memory card 19 into the card holder 66 by the user (Step S4a). The controller 61 then detects in Step S4b that the first memory card 19 is loaded into the card holder 66.

This is followed by the controller 61 automatically retrieving a plurality of photos (the digital video signals) which have been encoded in the form conforming to the JPEG (joint photoic experts group) standard and recorded in the first memory card 19 and displaying the photos in a seamless mode on the image display 14 in Step S4c, then, the routine is terminated (Step S4d).

In brief, as the first memory card 19 has been loaded into the card holder 66 by the user, photos recorded in the first memory card 19 are retrieved and automatically displayed in a seamless mode. This allows the user to display the photos recorded in the first memory card 19 without conducting any intricate operating action, thus making the overall operation of the user facilitated.

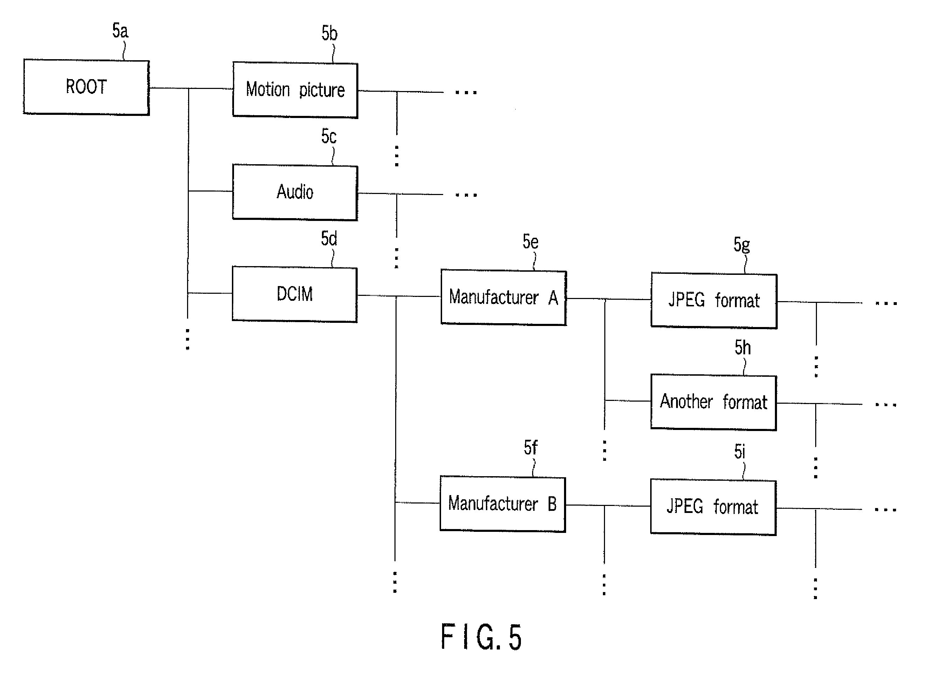

FIG. 5 illustrates one example of a directory structure in the first memory card 19. The directory structure has a hierarchy conforming to the DCF (design rule for camera file system) standard which is a common video file format for digital cameras.

More specifically, the top-most hierarchy or root directory (ROOT) 5a contains a set of sub-directories including a motion picture folder 5b, a sound folder 5c, and a DCIM folder 5d. The DCIM folder 5d is automatically generated when a photo is taken with a digital camera and its digital video signal is recorded. The DCIM folder 5d contains sub folders 5e and 5f assigned to the digital camera manufacturers A and B.

The sub folder 5e contains a sub folder 5g in which JPEG formatted photos are stored and a sub folder 5h in which photos other than the JPEG formatted photos are stored. Similarly, the sub folder 5f contains a sub folder 5i in which the JPEG formatted photos are stored.

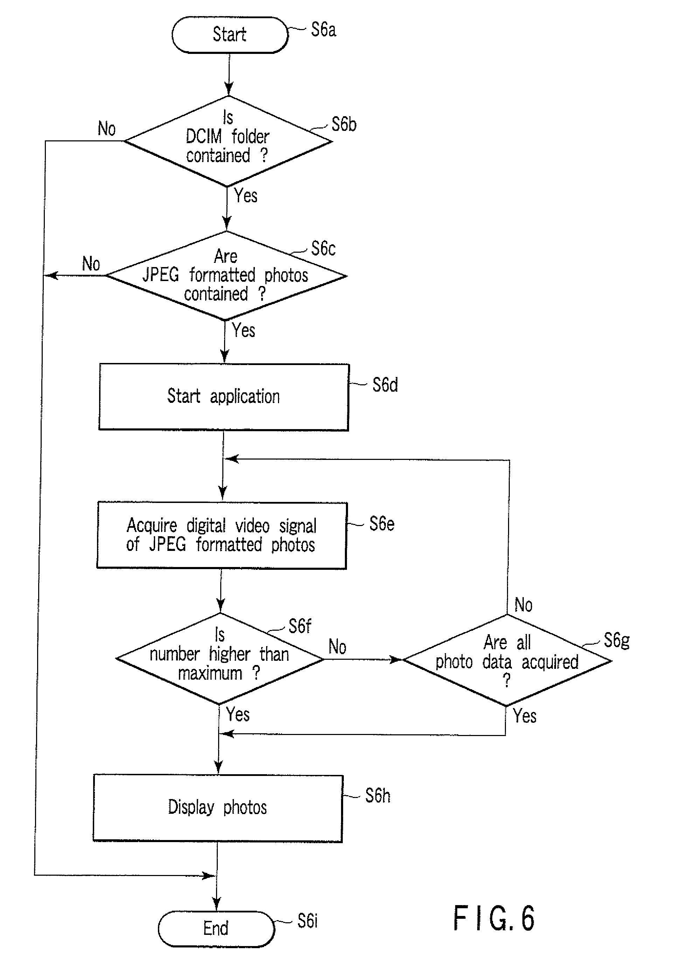

FIG. 6 illustrates a flowchart for automatically retrieving desired a plurality of JPEG formatted photos (digital image signals) from the first memory card 19 loaded to the card holder 66 and displaying the retrieved photos in a seamless mode on the image display 14, that is a first example of the processing operation in the step S4c shown in FIG. 4.

The operation starts with detecting that the first memory card 19 is loaded to the card holder 66 (Step S6a). Then, the controller 61 determines in Step S6b whether or not the first memory card 19 contains a DCIM folder 5d. When it is determined that no DCIM folder is contained (NO), the routine is terminated (Step S6i).

When it is determined in Step S6b that the first memory card 19 contains a DCIM folder 5d (YES), the controller 61 then determines in Step S6c whether or not the DCIM folder 5d contains a JPEG formatted photo at a lower hierarchical level. When it is determined that no JPEG formatted photo is contained (NO), the routine is terminated (Step S6i).

On the other hand, when it is determined in Step S6c that the DCIM folder 5d contains a JPEG formatted photo at a lower hierarchical level (YES), the controller 61 starts the application in Step S6d and acquires all the digital video signals of the JPEG formatted photos in Step S6e (from the sub folders 5g and 5i and their lower hierarchical folders in FIG. 5).

Thereafter, the controller 61 determines in Step S6f whether or not the number of the acquired photos is greater than a predetermined maximum number. When the determination result is negative (NO), the processing goes to Step S6g where it is determined whether or not all the digital video signals of the JPEG formatted photos have been completely acquired. When all the photos have not been completely acquired (NO), the processing returns back to Step S6e.

When it is determined in Step S6g that all the digital video signals of the JPEG formatted photos have been completely acquired (YES), or it is determined in Step S6f that the number of the acquired photos is greater than the maximum number, the controller 61 displays in Step S6h the acquired photos in a seamless mode on the image display 14, and the routine is terminated (Step S6i).

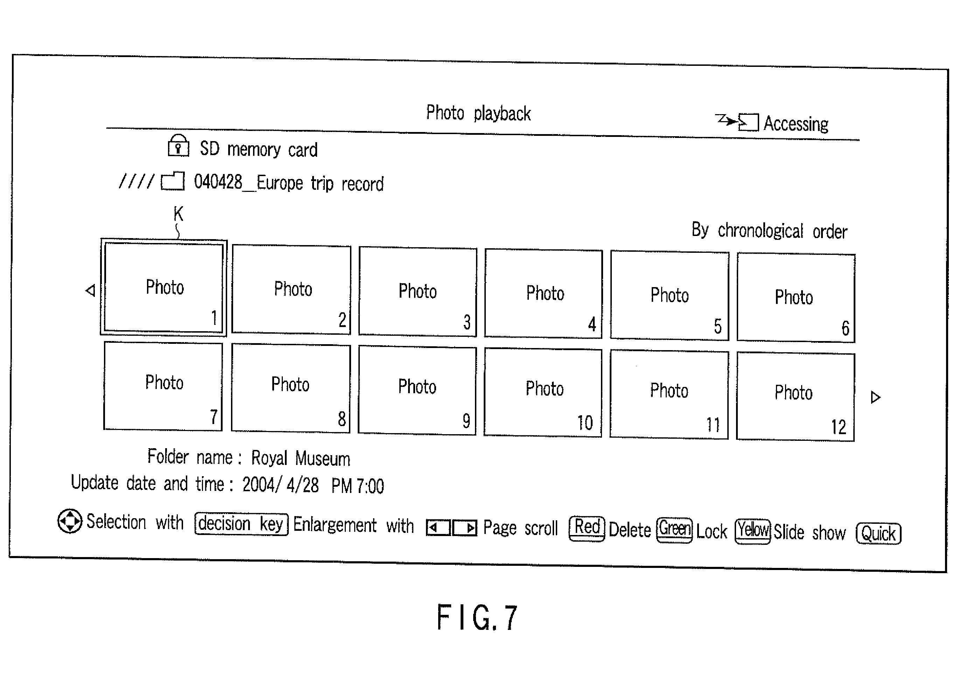

FIG. 7 illustrates one example of a screen of the image display 14 where the photos are displayed through the foregoing operations. The screen indicates simultaneously the photo reproduction mode, an SD memory card loaded as the first memory card 19, and twelve photos at maximum.

When the cursor key 17f on the remote controller 17 is operated to move the cursor K to the left from the photo 1, a photo preceding the photo 1 appears on the screen and the photo 12 disappears from the screen.

Alternatively, when the cursor key 17f on the remote controller 17 is operated to move the cursor K to the right from the photo 12, a photo succeeding the photo 12 appears on the screen and the photo 1 disappears from the screen.

Further, the page scroll key 17i on the remote controller 17 are operated, thereby making it possible to switch with one push the displayed twelve photos.

It is also possible that, when the cursor key 17f on the remote controller 17 is operated to move the cursor K to desired photo and then the decision key 17g is pressed down, the selected photo is displayed in its enlargement.

Attribute information of the photo pointed with the cursor K can further be displayed, the information including the title, the folder name, and the date and time of updating.

With the above operation, the DCIM folder 5d is detected when the first memory card 19 is loaded, and all the digital signals of the JPEG formatted photos in the DCIM folder 5d are acquired and displayed as pictures in a seamless mode. This allows the user to easily and readily display in the seamless mode a multiplicity of photos recorded in the first memory card 19 without acknowledging the concept of folders.

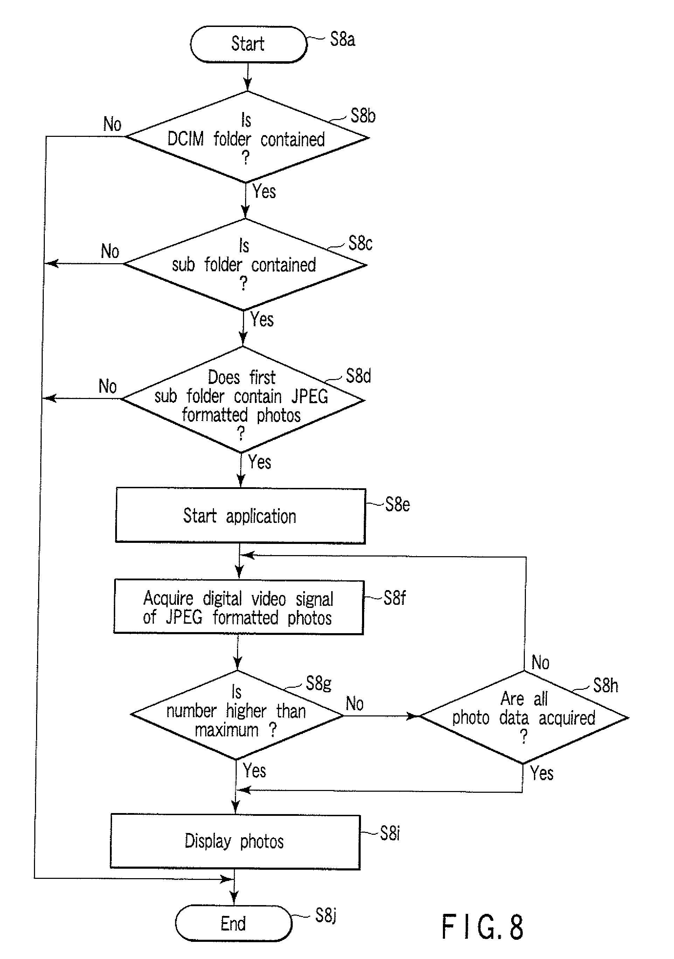

FIG. 8 illustrates a flowchart for automatically retrieving a plurality of JPEG formatted photos (the digital video signals) from the first memory card 19 loaded to the card holder 66 and displaying the retrieved photos in a seamless mode on the image display 14, that is a second example of the processing operation in step S4c shown in FIG. 4.

The processing starts with detecting that the first memory card 19 is loaded to the card holder 66 (Step S8a). Then, the controller 61 determines in Step S8b whether or not the loaded first memory card 19 contains a DCIM folder 5d. When it is determined that no DCIM folder is contained (NO), the routine is terminated (Step S8j).

When it is determined in Step S8b that the loaded first memory card 19 contains a DCIM folder 5d (YES), the controller 61 then determines in Step S8c whether or not the DCIM folder 5d contains any sub folder at a lower hierarchy level. When it is determined that no sub folder is contained (NO), the routine is terminated (Step S8j).

On the other hand, when it is determined in Step S8c that the DCIM folder 5d contains a sub folder at a lower hierarchy level (YES), the controller 61 determines in Step S8d whether or not the sub folder or the first one (5e in FIG. 5) of the sub folders contains JPEG formatted photos. When it is determined that no JPEG formatted photos are contained (NO), the routine is terminated (Step S8j).

when it is determined in Step S8d that the first sub folder in the DCIM folder 5d contains JPEG formatted photos (YES), the controller 61 starts the application in Step S8e and acquires in Step S8f all the digital video signals of the JPEG formatted photos from the first sub folder 5e.

Thereafter, the controller 61 determines in Step S8g whether or not the number of the acquired photos is greater than a predetermined maximum number. When the determination result is negative (No), the routine goes to Step S8h where it is determined whether or not all the digital video signals of the JPEG formatted photos have been completely acquired from the first sub folder 5e. when all the digital video signals have not been completely acquired (NO), the routine returns back to Step S8f.

When it is determined in Step S8h that all the digital video signals of the JPEG formatted photos have been completely acquired from the first sub folder 5e (YES) or it is determined in Step S8g that the number of the acquired photos is greater than the maximum number, the controller 61 displays in Step S8i the acquired photos in a seamless mode on the image display 14, and the routine is terminated (Step S8j) .

With the above operation, the DCIM folder 5d is detected when the first memory card 19 is loaded, and the digital video signals of the JPEG formatted photos contained in its sub folder 5e are acquired and displayed in a seamless mode. This allows the user to easily and readily display in the seamless mode a multiplicity of photos recorded in the first memory card 19 without acknowledging the concept of folders.

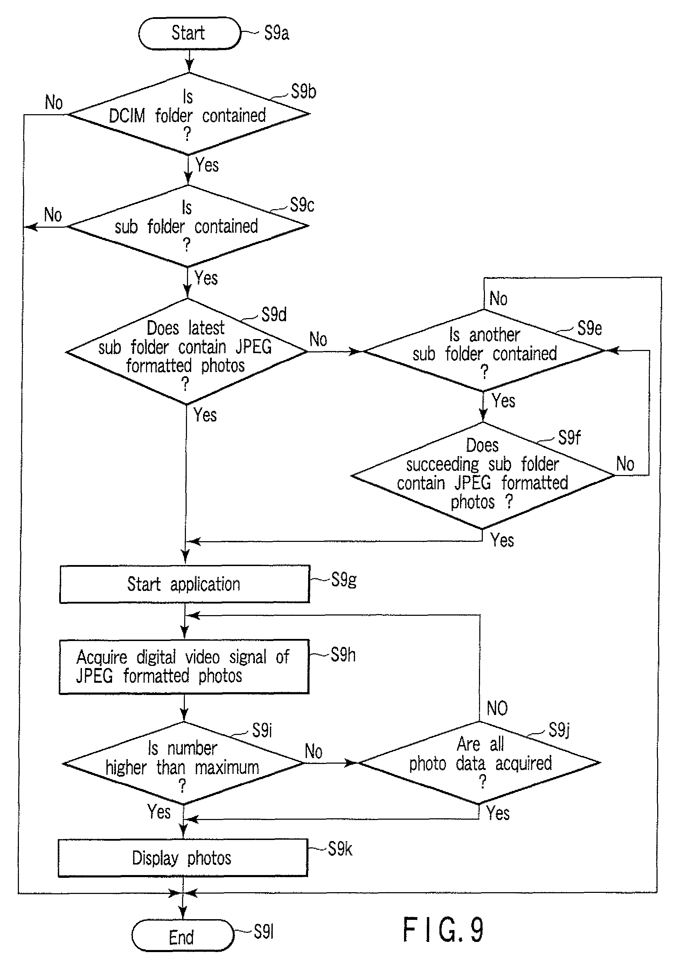

FIG. 9 illustrates a flowchart for automatically retrieving a plurality of JPEG formatted photos (the digital video signals) from the first memory card 19 loaded to the card holder 66 and displaying the retrieved photos in a seamless mode on the image display 14, that is a third example of the processing in the step S4c shown in FIG. 4.

The processing starts with detecting that the first memory card 19 is loaded to the card holder 66 (Step S9a). Then, the controller 61 determines in Step S9b whether or not the loaded first memory card 19 contains a DCIM folder 5d. When it is determined that no DCIM folder is contained (NO), the routine is terminated (Step S91).

When it is determined in Step S9b that the first memory card 19 contains the DCIM folder 5d (YES), the controller 61 then determines in Step S9c whether or not the DCIM folder 5d contains any sub folder at a lower hierarchy level. When it is determined that no sub folder is contained (NO), the routine is terminated (Step S91).

When it is determined in Step S9c that the DCIM folder 5d contains a sub folder at a lower hierarchy level, the controller 61 determines in Step S9d whether or not the latest sub folder contains JPEG formatted photos.

When it is determined that the latest sub folder contains no JPEG formatted photos (NO), the controller 61 determines in Step S9e whether or not the DCIM folder 5d contains another sub folder at a lower hierarchy level. When it is determined that no more sub folder is contained (NO), the routine is terminated (Step S91).

When it is determined in Step S9e that the DCIM folder 5d contains another sub folder at a lower hierarchy level (YES), the controller 61 determines in Step S9f whether or not the second latest sub folder contains JPEG formatted photos. When it is determined that no JPEG formatted photos are contained (NO), the routine returns back to Step S9e.

When it is determined in Step S9f that the second latest sub folder contains JPEG formatted photos (YES) or it is determined in Step S9d that the latest sub folder contains JPEG formatted photos (YES), the controller 61 starts the application in Step S9g and acquires in Step S9h all the digital video signals of the JPEG formatted photos from the latest sub folder.

Thereafter, the controller 61 determines in Step S9i whether or not the number of the acquired photos is greater than a predetermined maximum number. When the determination result is negative (NO), the routine goes to Step S9j where it is determined whether or not all the digital video signals of the JPEG formatted photos have been completely acquired from the latest sub folder. When all the signals have not been completely received (no in S9j), the routine returns back to Step S9h.

When it is determined in Step S9j that all the digital video signals of the JPEG formatted photos have been completely received from the latest sub folder (YES) or it is determined in Step S9i that the number of the acquired photos is greater than the maximum number (YES), the controller 61 displays in Step S9k the acquired photos in a seamless mode on the image display 14, and the routine is terminated (Step S91).

With the above operation, the DCIM folder 5d is detected when the first memory card 19 is loaded, the latest sub folder having the digital video signals of the JPEG formatted photos is detected from its sub folders, and the digital video signals of the JPEG formatted photos are acquired from the latest sub folder and displayed in a seamless mode. This allows the user to easily and readily display in the seamless mode a multiplicity of photos recorded in the first memory card 19 without acknowledging the concept of folders.

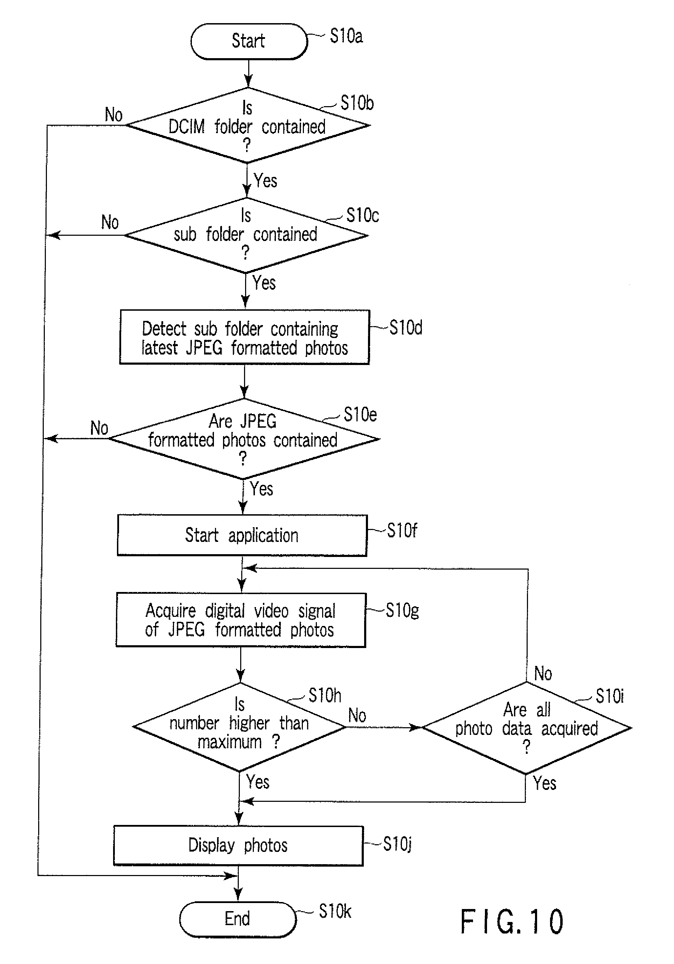

FIG. 10 illustrates a flowchart for automatically retrieving a plurality of JPEG formatted photos (the digital video signals) from the first memory card 19 loaded to the card holder 66 and displaying the retrieved photos in a seamless mode on the image display 14, that is a fourth example of the processing in the step S4c shown in FIG. 4.

The processing starts with detecting that the first memory card 19 is loaded to the card holder 66 (Step S10a). Then, the controller 61 determines in Step S10b whether or not the loaded first memory card 19 contains a DCIM folder 5d. When it is determined that no DCIM folder is contained (NO), the routine is terminated (Step S10k).

When it is determined in Step S10b that the first memory card 19 contains the DCIM folder 5d (YES), the controller 61 then determines in Step S10c whether or not the DCIM folder 5d contains any sub folder at a lower hierarchy level. When it is determined that no sub folder is contained (NO), the routine is terminated (Step S10k).

when it is determined in Step S10c that the DCIM folder 5d contains a sub folder at a lower hierarchy level, the controller 61 detects in Step S10d a sub folder having JPEG formatted photos conforming to the JPEG standard, the sub folder being the latest updated version, from sub folders at a lower hierarchy level in the DCIM folder 5d.

The controller 61 then determines in Step S10e whether or not the DCIM sub folder contains JPEG formatted photos. When it is determined that no JPEG formatted photos are contained (NO), the routine is terminated (Step S10k).

When it is determined in Step S10e that the detected sub folder contains JPEG formatted photos (YES), the controller 61 starts the application in Step S10f and acquires in Step S10g all the digital video signals of the JPEG formatted photos stored in the detected sub folder.

Thereafter, the controller 61 determines in Step S10h whether or not the number of the acquired photos is greater than a predetermined maximum number. When the determination result is negative (NO), the routine goes to Step S10i where it is determined whether or not all the digital video signals of the JPEG formatted photos have been completely acquired. When all the signals have not been completely acquired (NO), the routine returns back to Step S10g.

When it is determined in Step S10i that all the digital video signals of the JPEG formatted photos have been completely acquired (YES) or it is determined in Step S10h that the number of the acquired photos is greater than the maximum number (YES), the controller 61 displays in Step S10j the acquired photos in a seamless mode on the image display 14, and the routine is terminated (Step S10k).

With the above operation, the DCIM folder 5d is detected when the first memory card 19 is loaded, a sub folder having the JPEG formatted photos, the sub folder being the latest updated version, is detected from the sub folder, and the digital video signals of the JPEG formatted photos are acquired from the detected sub folder and displayed in a seamless mode. This allows the user to easily and readily display in the seamless mode a multiplicity of photos recorded in the first memory card 19 without acknowledging the concept of folders.

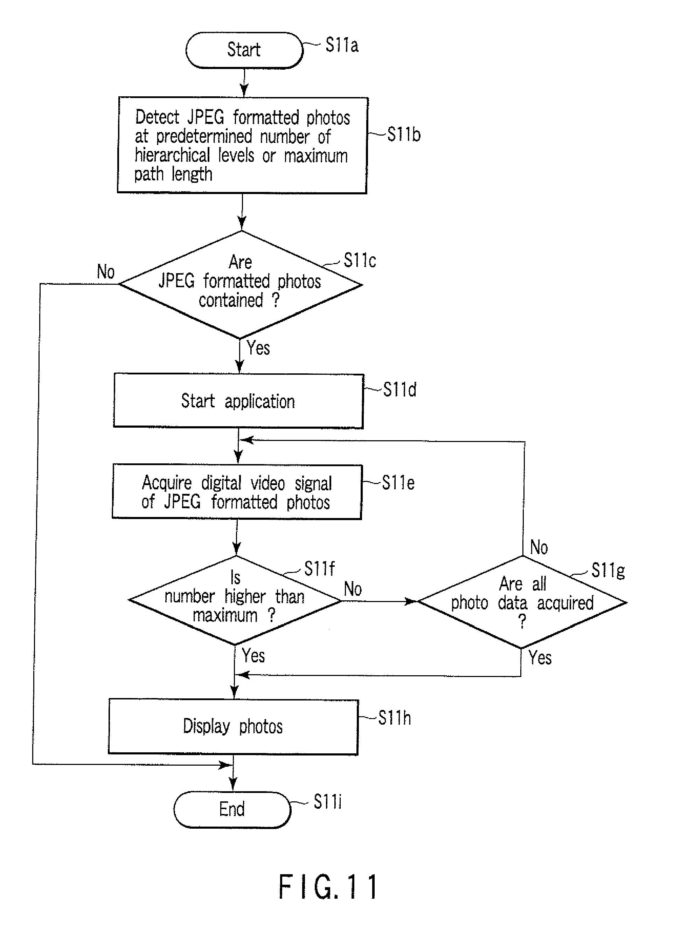

FIG. 11 illustrates a flowchart for automatically retrieving a plurality of JPEG formatted photos (the digital video signals) from the first memory card 19 loaded to the card holder 66 and displaying the retrieved photos in a seamless mode on the image display 14, that is a fifth example of the processing in the step S4c shown in FIG. 4.

The processing starts with detecting that the first memory card 19 is loaded to the card holder 66 (Step S11a). Then in Step S11b, the controller 61 detects the JPEG formatted photos from the first memory card 19 in a range of at least one of the predetermined number of hierarchical levels and the predetermined path length (path limitation).

The controller 61 determines in Step S11c whether or not the JPEG formatted photos are contained. When it is determined that the JPEG formatted photos are not contained (NO), the routine is terminated (Step S11i).

When it is determined in Step S11c that the JPEG formatted photos are contained (YES), the controller 61 starts the application in Step S11d and acquires in Step S11e all the digital video signals of the JPEG formatted photos in the above-described range.

Thereafter, the controller 61 determines in Step S11f whether or not the number of the acquired photos is greater than a predetermined maximum number. When the determination result is negative (NO), the routine goes to Step S11g where it is determined whether or not all the digital video signals of the JPEG formatted photos have been completely acquired. When all the signals have not been completely received (NO), the routine returns back to Step S11e.

When it is determined in Step S11g that all the digital video signals of the JPEG formatted photos have been completely acquired (YES) or it is determined in Step S11f that the number of the acquired photos is greater than the maximum number (YES), the controller 61 displays in Step S11h the acquired photos in a seamless mode on the image display 14, and the routine is terminated (Step S11i)*.*

With the above operation, the digital video signals of the JPEG formatted photos in the range of the predetermined number of hierarchical levels and the predetermined path length are acquired when the first memory card 19 is loaded and displayed as pictures in a seamless mode. This allows the user to easily and readily display in the seamless mode a multiplicity of photos recorded in the first memory card 19 without acknowledging the concept of folders.

The predetermined number of hierarchical levels to be searched may be five from the highest, for example. The path limitation may limit the path from the root directory to the sub directory in the hierarchy and its length.

The five examples shown in FIGS. 6 to 11 are arranged in which the number of photos to be acquired is limited to a predetermined maximum number. This can minimize the overall length of processing time. Although the maximum number is preferably about 1000, it may arbitrarily be determined by a user.

According to the embodiment, in response to the loading of the first memory card 19, the JPEG formatted photos recorded in the first memory card 19 are automatically retrieved and displayed as pictures in a seamless mode on the monitor screen, but not limited thereto. Even when any other external device capable of recording digital video signals corresponding to photos, for example, a USB device such as a digital camera, a mobile telephone, or a card reader/writer is connected, the JPEG formatted photos stored in the USB device are automatically retrieved and displayed as pictures in a seamless mode.

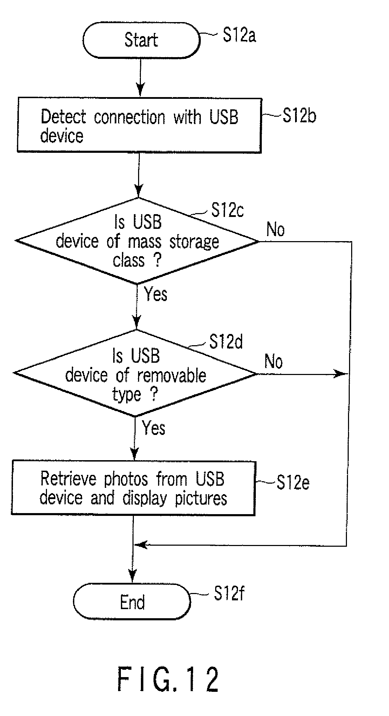

FIG. 12 is a flowchart showing an operation for displaying a multiplicity of photos stored as the digital video signals in the connected USB device on the digital television broadcast receiver 11.

The operation starts with connecting the USB device with the USB terminal 23 by the user (Step S12a). First, the controller 61 detects in Step S12b that the USB device is connected to the USB terminal 23.

This is followed by Step S12c where the controller 61 determines whether or not the connected USB device is of a mass storage class in order to determine whether or not the USB device is capable of recording the digital video signals. This determination can be implemented by a device descriptor in USB protocol communication with the use of a small computer system interface (SCSI) command.

When it is determined that the USB device is not of a mass storage class (NO), the controller 61 terminates the routine (Step S12f). When it is determined that the USB device is of a mass storage class (YES), the routine goes to Step S12d where it is determined whether or not the connected USB device is a removable device (such as a digital camera, a mobile telephone, or a portable card reader/writer). This determination can be implemented in response to data by INQUIRY of the SCSI command.

When it is determined that the USB device is not a removable device (NO), the controller 61 terminates the routine (Step S12f). When it is determined that the USB device is a removable device (YES), the routine goes to Step S12e where the photos (the digital video signals) encoded and recorded in the form conforming to the JPEG standard in the connected USB device are automatically retrieved and the retrieved photos are then displayed in a seamless mode on the image display 14, and the routine is terminated (Step S12f).

The processing in Step S12e can be implemented by one of the five examples shown in FIGS. 6 to 11.

The present invention is not limited to the foregoing embodiment but may be embodied in various modifications without departing the scope of the present invention. Also, the present invention can be implemented by any desired combination of the above-described elements and factors applied in the embodiment. For example, some elements or factors may be eliminated from the embodiment. The elements and factors in some other different embodiments may also be used in a combination for embodying the present invention.

## Claims

1. A picture reproducing apparatus **characterized by** comprising:
a recording medium detecting means (61) configured to detect connection with a recording medium (19);
a folder detecting means (61) configured to, when the recording medium detecting means (61) detects the connection with the recording medium (19), detect from the recording medium (19) a specific folder generated conforming to a predetermined picture file format standard;
an acquisition means (61) configured to, when the folder detecting means (61) detects the specific folder, acquire predetermined digital video signals from the specific folder; and
a display means (14) configured to play back and display the digital video signals acquired by the acquisition means (61).

2. A picture reproducing apparatus according to claim 1, **characterized in that**
the acquisition means (61) is configured to acquire all the digital video signals stored in the specific folder.

3. A picture reproducing apparatus according to claim 1, **characterized in that**
the acquisition means (61) is configured to acquire the digital video signals stored in the first one of sub folders at a lower hierarchical level in the specific folder.

4. A picture reproducing apparatus according to claim 1, **characterized in that**
the acquisition means (61) is configured to acquire the digital video signals stored in a sub folder having the latest updating date of sub folders at a lower hierarchical level in the specific folder.

5. A picture reproducing apparatus according to claim 4, **characterized in that**
the acquisition means (61) is configured to, when the digital video signals are not stored in a sub folder having the latest updating date of sub folders at a lower hierarchical level in the specific folder, acquire the digital video signals from a sub folder having the second latest updating date.

6. A picture reproducing apparatus according to claim 1, **characterized in that**
the acquisition means (61) is configured to retrieve a sub folder having the latest updating date and having the digital video signals stored therein, of sub folders at a lower hierarchical level in the specific folder, and then acquire all the digital video signals stored in the sub folder.

7. A picture reproducing apparatus according to claim 1, **characterized in that**
the specific folder generated conforming to the predetermined picture file format standard is a DCIM folder in the DCF standard.

8. A picture reproducing apparatus according to claim 1, **characterized in that**
the acquisition means (61) is configured to acquire digital video signals encoded and stored in the form conforming to the JPEG format.

9. A picture reproducing apparatus according to claim 1, **characterized in that**
the folder detecting means (61) is configured to detect from the recording medium (19) a plurality of folders having a hierarchy structure generated conforming to a predetermined picture file format standard, and
the acquisition means (61) is configured to acquire from the plurality of detected folders digital video signals defined by at least one of a predetermined number of hierarchical levels and a predetermined path limitation.

10. A picture reproducing method **characterized by** comprising:
a first step (S4b) of detecting connection with a recording medium (19);
a second step (S4c, S6b, S8b, S9b, S10b) of, when the connection with the recording medium (19) is detected, detecting from the recording medium (19) a specific folder generated conforming to a predetermined picture file format standard;
a third step (S4c, S6c to S6e, S8c to S8f, S9c to S9h, S10c to S10g) of, when the specific folder is detected, acquiring predetermined digital video signals from the specific folder; and
a fourth step (S4c, S6h, S8i, S9k, S10j) of playing back and displaying the acquired digital video signals.

11. A picture reproducing method according to claim 10, **characterized in that**
the third step (S4c, S6c to S6e, S8c to S8f, S9c to S9h, S10c to S10g) is arranged for retrieving all the digital video signals stored in the specific folder.

12. A picture reproducing method according to claim 10, **characterized in that**
the third step (S4c, S6c to S6e, S8c to S8f, S9c to S9h, S10c to S10g) is arranged for retrieving the digital video signals stored in the first one of sub folders at a lower hierarchical level in the specific folder.

13. A picture reproducing method according to claim 10, **characterized in that**
the third step (S4c, S6c to S6e, S8c to S8f, S9c to S9h, S10c to S10g) is arranged for retrieving the digital video signals stored in one of sub folders, which is assigned with the latest updating date, at a lower hierarchical level in the specific folder.

14. A picture reproducing method according to claim 13, **characterized in that**
the third step (S4c, S6c to S6e, S8c to S8f, S9c to S9h, S10c to S10g) is arranged for retrieving the digital video signals stored in a sub folder preceded by the sub folder which is assigned with the latest updating date at a lower hierarchical level in the specific folder when the sub folder assigned with the latest updating date contains no digital video signal.

15. A picture reproducing method according to claim 10, **characterized in that**
the third step (S4c, S6c to S6e, S8c to S8f, S9c to S9h, S10c to S10g) is arranged for picking up one of sub folders, which is assigned with the latest updating date and contains the digital video signals, at a lower hierarchical level in the specific folder and then retrieving all the digital video signals stored in the sub folder.

16. A picture reproducing method according to claim 10, **characterized in that**
the second step (S4c, S6b, S8b, S9b, S10b) is arranged for picking up from the recording medium (19) a plurality of folders having a hierarchical structure determined conforming to a predetermined picture file format standard, and
the third step (S4c, S6c to S6e, S8c to S8f, S9c to S9h, S10c to S10g) is arranged for retrieving from the plurality of folders the digital video signals in a range defined by at least either a predetermined maximum hierarchical level or a path limitation.
